Europäisches Patentamt

European Patent Office

Office européen des brevets

(19)

(11) EP 1 396 996 A2

(12) **EUROPEAN PATENT APPLICATION**

(43) Date of publication:
10.03.2004 Bulletin 2004/11

(51) Int Cl.7: **H04N 1/60**, H04N 9/68

(21) Application number: 03255429.7

(22) Date of filing: 29.08.2003

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **29.08.2002 US 230827**

(71) Applicant: SAMSUNG ELECTRONICS CO., LTD.
Suwon-City, Kyungki-do (KR)

(72) Inventor: **Kim, Yeong-taeg**
Irvine, California 92618 (US)

(74) Representative: **Geary, Stuart Lloyd et al**
Venner, Shipley & Co.,
20 Little Britain
London EC1A 7DH (GB)

(54) **RGB signal saturation adjustment**

(57)     The present invention relates to a method for adjusting the saturation levels of the pixels of a time varying image being represented by RGB colour sample vectors $\vec{C}$ in an RGB colour system. The method does not require the RGB colour sample vectors $\vec{C}$ to be converted into YUV samples in order to subsequently perform saturation adjustment. The method includes steps of: decomposing an RGB colour sample vector $\vec{C}$ into a white vector $\vec{w}$ and a colour tone vector $\vec{C}_T$; obtaining a saturation adjusted colour tone vector $C_T^o$ by multiplying the colour tone vector $\vec{C}_T$ by a saturation adjustment parameter; obtaining a saturation adjusted RGB colour sample vector $\vec{C}_o$ by adding the white vector $\vec{w}$ and the saturation adjusted colour tone vector $\vec{C}_T^o$; and using the saturation adjusted RGB colour sample vector $\vec{C}_o$ to represent a colour pixel of an output image.

**FIG. 4**

EP 1 396 996 A2

**Description**

The present invention relates a method of adjusting the colour saturation level of a pixel of an RGB format image signal.

The luminance and chromatic component *Y, U, V* colour system, also known as the luminance and colour difference colour system (*Y, R-Y,B-Y*) is the colour system that is most widely used in video systems. For example, in a digital TV system, the *Y, U*, and *V* signals of a video are compressed and transmitted. In such a system, since the colour information is embedded in the chroma signals *U* and *V*, the colour saturation level is simply adjusted by multiplying the chroma signals *U* and *V* by a colour saturation adjusting gain $\alpha$ as expressed by the following equations:

$$U_o = \alpha \cdot U \text{ and } V_o = \alpha \cdot V.$$

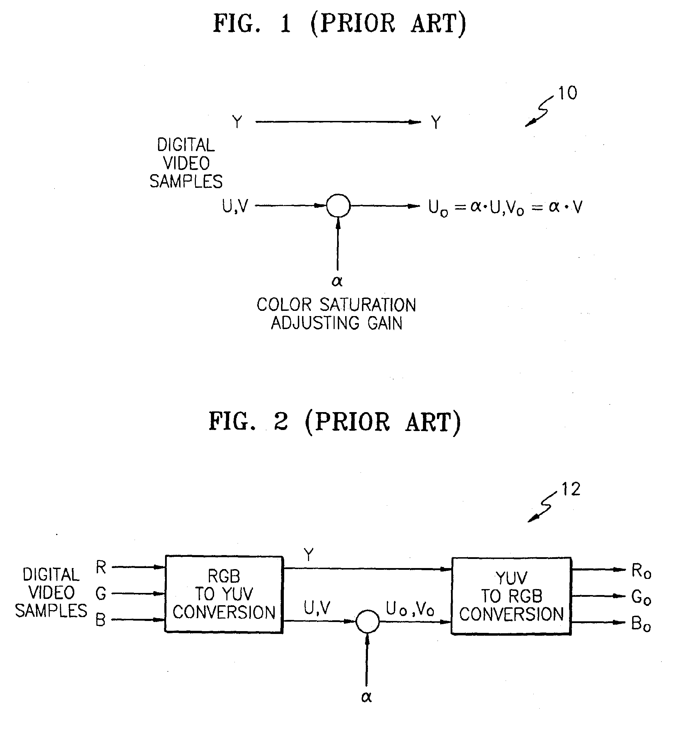

$U_o$ and $V_o$ now represent colour adjusted chroma signals. Figure 1 is a block diagram of a prior art colour saturation adjusting circuit 10 that can be used to multiply the sample values of the chroma signals *U* and *V* by the colour saturation adjusting gain $\alpha$. Note that if the colour saturation adjusting gain $\alpha = 0$, the resulting sample value will have no colour. If the colour saturation adjusting gain $\alpha > 1$, then the colour of the resulting sample value will be enriched.

In a prior art RGB colour system, colour saturation adjustment is performed using the colour saturation adjustment circuit 12 shown in Figure 2. Each RGB input sample vector is converted to a YUV sample value, and the colour saturation adjusting method shown in Figure 1 is performed on each YUV sample value. The output colour saturation adjusted RGB sample vectors are then obtained by converting the $Y_0, U_0, V$ colour sample values to RGB colour sample vectors. As can be seen, considerable computation is required for the conversions.

A method according to the present invention does not involve converting pixel data from RGB to YUV format and is characterised by processing the RGB data $\vec{C}$ for said pixel to produce at least one value $\vec{w}$ representing the whiteness of the pixel and three values $\vec{C}_T$ representing the colour tone of the pixel, processing the colour tone representing values by multiplication with a saturation adjustment parameter, regenerating RGB data $\vec{C}_o$ for said pixel from the whiteness representing value or values $\vec{w}$ and the result of said processing of the colour tone representing values, and outputting the RGB format image signal with the regenerated RGB data for said pixel instead of the original RGB data for said pixel.

The method is applied to all of the pixels of an image and may also be applied to video, i.e. moving, images.

Additional preferred and optional features are set out in claims 4 to 26 appended hereto.

Embodiments of the present invention will now be described, by way of example, with reference to Figures 3 to 15 of the accompanying drawings, in which:-

Figure 1 is a block diagram of a prior art colour saturation adjusting circuit;
Figure 2 is a block diagram of a prior art colour saturation adjusting circuit that is used in an RGB colour system;
Figure 3 shows a graphical representation of the decomposition of an RGB colour sample vector into a white vector and a colour tone vector;
Figure 4 is a block diagram of a circuit for performing an example of a first embodiment of the method for colour saturation adjustment;
Figure 5 is a block diagram of a circuit for performing another example of the first embodiment of the method for colour saturation adjustment;
Figure 6 is a block diagram of a circuit for performing an example of a second embodiment of the method for colour saturation adjustment;
Figure 7 is a block diagram of a circuit for performing another example of the second embodiment of the method for colour saturation adjustment;
Figure 8 is a block diagram of two multipliers;
Figure 9 is a block diagram of a circuit for performing a first embodiment of a method of calculating a saturation adjusted colour tone vector

$$\vec{C_T^o};$$

Figure 10 is a block diagram of a circuit for performing a second embodiment of the method of calculating the saturation adjusted colour tone vector

$$\vec{C_T^o};$$

Figures 11-13 are graphs of mathematical functions;
Figure 14 is a block diagram of a circuit for performing a third embodiment of the method of calculating the saturation adjusted colour tone vector

$$\vec{C_T^o};$$

and
Figure 15 is a flowchart showing the steps performed in a fourth embodiment of the method of calculating the saturation adjusted colour tone vector

$$\vec{C_T^o}.$$

.

The following text uses a single digital RGB colour sample vector $\vec{C}=(R,G,B)$ to explain the invention. It should be readily apparent, however, that in a practical application, the inventive method will be applied to a plurality of digital RGB colour sample vectors $\vec{C}$ representing the images obtained from the time varying RGB video signals of an RGB colour system.

The invention begins with decomposing a given digital RGB colour input sample vector $\vec{C}=(R,G,B)$ into two components according to the following equation:

$$\vec{C}=\vec{w}+\vec{C_T}. \tag{1}$$

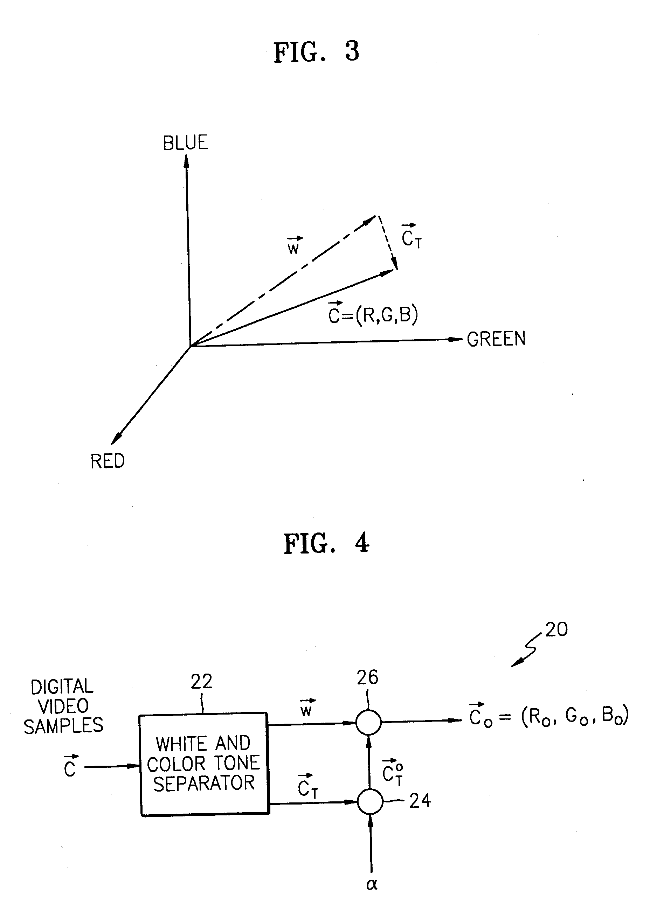

Here, $\vec{w}$ represents a white vector and $\vec{C_T}=(R_T,G_T,B_T)$ represents a colour tone vector associated with the colour input sample vector. The white vector $\vec{w}$ presumably contains the lightness quantity and the colour tone vector $\vec{C_T}=(R_T,G_T,B_T)$ contains the colour information. Figure 3 shows a graphical representation of this decomposition. The range of the colour samples is assumed to be $0 \leq R,\ G,\ B \leq 255$, however, the invention can be used with colour samples having any range. Note that the direction of the colour tone vector $\vec{C_T}$ is associated with the *"hue"*, while the magnitude of the colour tone vector $\vec{C_T}$ is associated with the *"saturation"*.

A first embodiment of the method for colour saturation adjustment is based on applying the following equation:

$$\vec{C_o}=\vec{w}+P\cdot\vec{C_T}=\vec{w}+\vec{C_T^o}. \tag{2a}$$

Here, P is a saturation adjustment parameter, which when multiplied against the colour tone vector $\vec{C_T}$, works to adjust the saturation of the colour tone vector $\vec{C_T}$. The vector $P\cdot\vec{C_T}$ represents a saturation adjusted colour tone vector

$$\vec{C_T^o}.$$

The vector $\vec{C_o}$ is a saturation adjusted RGB colour sample vector, which can be output to represent a pixel of an output image.

Subsequently, in this text, four specific examples of methods are provided that can be used to obtain the saturation adjusted colour tone vector

$$\vec{C_T^o}.$$

These methods differ in the specific form of the saturation adjustment parameter *P* that is used. The saturation adjustment parameter *P* can take the form of a colour saturation adjusting gain $\alpha$. This colour saturation adjusting gain $\alpha$ can be obtained from the actions of a user of the system or from a circuit constructed to set the colour saturation adjusting gain $\alpha$. The saturation adjustment parameter *P* can alternatively include two factors, namely a colour saturation adjusting gain $\alpha$ and a saturation limiting parameter $\beta$, which are multiplied together. In an additional alternative, the saturation adjustment parameter $P$ can be a variable denoted by r. The saturation adjustment parameter $P$ can also take the form of a real colour adjusting gain x. The specific forms of the saturation adjustment parameter $P$ will become clear with regard to further explanations provided later on in this text.

An example of the first embodiment of the method for colour saturation adjustment will be further explained in a version in which the saturation adjustment parameter $P$ takes the form of a colour saturation adjusting gain $\alpha$, where ($\alpha \geq 0$). This example of the first embodiment of the method for colour saturation adjustment will then be based on applying the following equation:

$$\vec{C}_o = \vec{w} + \alpha \cdot \vec{C}_T = \vec{w} + \vec{C_T^o}. \tag{2b}$$

In equation (2b), it can be seen that the saturation adjusted colour tone vector

$$\vec{C_T^o}$$

equals $\alpha \cdot \vec{C}_T$. Note that $\vec{C}_o = \vec{w}$ if $\alpha = 0$ (no colour), $\vec{C}_o = \vec{C}$ when $\alpha = 1$, and the colour saturation level is increased if $\alpha > 1$.

Figure 4 shows a block diagram of a circuit 20 for performing the example of the first embodiment of the method for colour saturation adjustment in which the saturation adjustment parameter $P$ takes the form of a colour saturation adjusting gain $\alpha$. The white and colour tone separator 22 decomposes the input colour vector $\vec{C} = (R,G,B)$ into a white vector $\vec{w}$ and a colour tone vector $\vec{C}_T = (R_T, G_T, B_T)$ as described by equation (1). The saturation adjusted colour tone vector

$$\vec{C_T^o}$$

is obtained using the multiplier 24, which performs the operation

$$\vec{C_T^o} = \alpha \cdot \vec{C}_T.$$

The saturation adjusted RGB colour sample vector $\vec{C}_o$ is obtained from the vector summer 26, which adds the white vector $\vec{w}$ and the saturation adjusted colour tone vector

$$\vec{C_T^o}.$$

The input colour vector $\vec{C} = (R,G,B)$ can be decomposed into a white vector $\vec{w}$ and a colour tone vector $\vec{C}_T = (R_T, G_T, B_T)$ using any of a number of different decompositions. Although, the invention is not meant to be limited to any specific decomposition, the decomposition can be performed, for example, by using any of the following decompositions:

$$\vec{C}_T = (R-Y,\ G-Y,\ B-Y) \text{ and } \vec{w} = (Y,Y,Y),$$

$$\text{where } Y \text{ is a luminance value;} \tag{3}$$

$$\vec{C}_T = (R-X, G-X, B-X) \text{ and } \vec{w} = (X,X,X),$$

$$\text{where } X = \frac{R+G+B}{3}\ ; \text{ and} \tag{4}$$

$$\vec{C}_T = (R - \frac{G+B}{2},\ G - \frac{R+B}{2},\ B - \frac{R+G}{2}) \text{ and}$$

$$\vec{w} = (\frac{G+B}{2},\ \frac{R+B}{2},\ \frac{R+G}{2}). \tag{5}$$

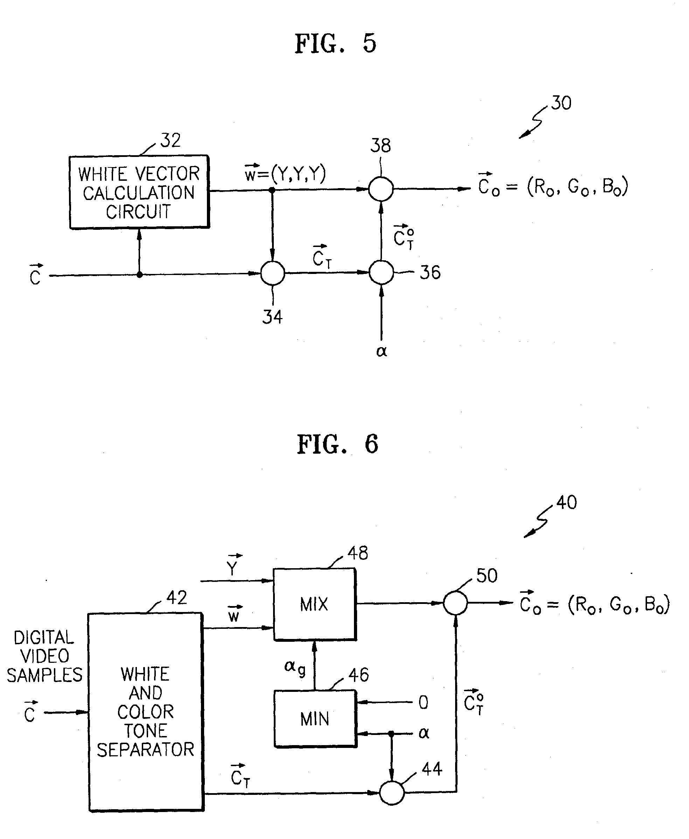

Figure 5 shows a block diagram of a circuit 30 for performing the first embodiment of the method in which the decomposition described in equation (3) is performed. The white vector calculation circuit 32 calculates a luminance value Y from the RGB colour sample vector $\vec{C}$ and constructs a white vector $\vec{w}$. Each component of the white vector $\vec{w}$ is equal to the luminance value Y. The vector summer 34 subtracts the white vector $\vec{w}$ from the RGB colour sample vector $\vec{C}$ to obtain the colour tone vector $\overrightarrow{C_T}$ The multiplier 36 multiplies the colour tone vector $\overrightarrow{C_T}$ by the colour saturation adjusting gain $\alpha$ to obtain the saturation adjusted colour tone vector

$$\overrightarrow{C_T^o}.$$

The vector summer 38 adds the saturation adjusted colour tone vector

$$\overrightarrow{C_T^o}$$

and the white vector $\vec{w}$ to obtain the saturation adjusted RGB colour sample vector $\vec{C}_o$. It is assumed that the colour saturation adjusting gain $\alpha$ is equal to or greater than zero.

Turning our attention to the case when the colour saturation adjusting gain $\alpha = 0$ in equation (2b), note that the saturation adjusted RGB colour sample vector $\vec{C}_o$ may not be a grey value depending on the choice of the colour tone vector $\vec{C}_T$ or equivalently on the choice of the white vector $\vec{w}$. For instance, if we choose to use equation (3) for the decomposition, the saturation adjusted RGB colour sample vector $\vec{C}_o$ will be $(Y,Y,Y)$ when the colour saturation adjusting gain $\alpha = 0$. This implies that the saturation adjusted RGB colour sample vector $\vec{C}_o$ is a grey value. However, if we choose to use equation (4) for the decomposition, the saturation adjusted RGB colour sample vector $\vec{C}_o$ will be $(X,X,X)$ when $\alpha = 0$. In this case, the saturation adjusted RGB colour sample vector $\vec{C}_o$ becomes a grey value, but it is somewhat different from the typical grey value denoted as *Y*. Furthermore, if we choose to use equation (5) for the decomposition, the saturation adjusted RGB colour sample vector $\vec{C}_o$ will be $(\frac{G+B}{2}, \frac{R+B}{2}, \frac{R+G}{2})$ when $\alpha = 0$, which is not a grey value, in general. In most cases, it is desirable to ensure that the saturation adjusted RGB colour sample vector $\vec{C}_o$ becomes a grey value whose gradation level is associated with the luminance value of the input signal $\vec{C} = (R, G, B)$ when $\alpha = 0$. For this purpose, a grey mixing ratio is defined as:

$$\alpha_g = \min(1.0, \alpha).$$

A second embodiment of the method for colour saturation adjustment is based on applying the following equation:

$$\vec{C}_o = \vec{Y}\cdot(1-\alpha_g) + \vec{w}\cdot\alpha_g + P\cdot\vec{C}_T;$$

or

$$\vec{C}_o = \vec{Y}\cdot(1-\alpha_g) + \vec{w}\cdot\alpha_g + \overrightarrow{C_T^o}; \text{ where } \vec{Y} = (Y,Y,Y). \tag{6a}$$

As with the first embodiment, *P* is the saturation adjustment parameter and

$$\overrightarrow{C_T^o}$$

is a saturation adjusted colour tone vector. It should be clear that the second embodiment of the method for colour saturation adjustment is equivalent to the first embodiment except for the fact that additional steps are performed. In particular, the grey mixing ratio $\alpha_g$ is multiplied with the white vector $\vec{w}$ before the summation is performed, and the term $\vec{Y}\cdot(1-\alpha_g)$ is included in the summation. The term $\vec{Y}\cdot(1-\alpha_g)$ is defined as a grey level adjusted vector.

An example of the second embodiment of the method for colour saturation adjustment will be further explained in a version in which the saturation adjustment parameter *P* takes the form of a colour saturation adjusting gain $\alpha$, where $(\alpha \geq 0)$. This example of the second embodiment of the method for colour saturation adjustment will then be based on applying the following equation:

$$\vec{C}_o=\vec{Y}\cdot(1-\alpha_g)+\vec{w}\cdot\alpha_g+\alpha\cdot\vec{C}_T;\ \text{where}\ \vec{Y}=(Y,\ Y,\ Y). \tag{6b}$$

The saturation adjusted RGB colour sample vector $\vec{C}_o$ approaches $(Y,Y,Y)$ as $\alpha$ approaches 0. Therefore, the saturation adjusted RGB colour sample vector $\vec{C}_o$ becomes a grey value whose gradation level is $Y$. Note that the saturation adjusted RGB colour sample vector $\vec{C}_o$ in equation (6b) is equivalent to that in equation (2b) when $\alpha\geq1$.

Figure 6 shows a block diagram of a circuit 40 for performing this example of the second embodiment of the method for colour saturation adjustment. The white and colour tone separator 42 decomposes the input colour vector $\vec{C}=(R,G,B)$ into a white vector $\vec{w}$ and a colour tone vector $\vec{C}_T=(R_T,G_T,B_T)$ as described by equation (1). The saturation adjusted colour tone vector

$$\overrightarrow{C_T^o}$$

is obtained using the multiplier 44, which performs the operation

$$\overrightarrow{C_T^o}=\alpha\cdot\vec{C}_T.$$

The minimum value selection circuit 46 obtains the minimum value selected from one and the colour saturation adjusting gain $\alpha$, and provides the result as the grey mixing ratio $\alpha_g$. The output signal of the mixer 48 is $\vec{Y}\cdot(1-\alpha_g)+\vec{w}\cdot\alpha_g$. The saturation adjusted RGB colour sample vector $\vec{C}_o$ is obtained from the adder 50, which adds the saturation adjusted colour tone vector

$$\overrightarrow{C_T^o}$$

and the term $\vec{Y}\cdot(1-\alpha_g)+\vec{w}\cdot\alpha_g$ obtained from the mixer 48.

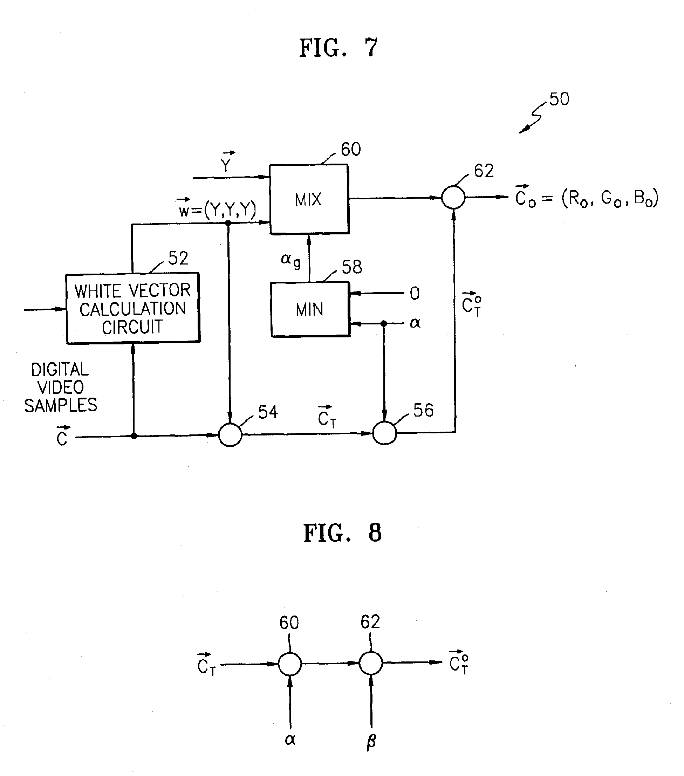

Figure 7 shows a block diagram of a particular implementation of the circuit 50 for performing the second embodiment of the method for colour saturation adjustment. The circuit 50 implements equation (3) to perform the decomposition. The white vector calculation circuit 52 calculates a luminance value Y from the RGB colour sample vector $\vec{C}$ and constructs a white vector $\vec{w}$. Each component of the white vector $\vec{w}$ is equal to the luminance value Y. The vector summer 54 subtracts the white vector $\vec{w}$ from the RGB colour sample vector $\vec{C}$ to obtain the colour tone vector $\overrightarrow{C_T}$. The multiplier 56 multiplies the colour tone vector $\overrightarrow{C_T}$ by the colour saturation adjusting gain $\alpha$ to obtain the saturation adjusted colour tone vector

$$\overrightarrow{C_T^o}.$$

The minimum value selection circuit 58 chooses a minimum value from one and the colour saturation adjusting gain $\alpha$, and provides the result as the grey mixing ratio $\alpha_g$. The output signal of the mixer 60 is $\vec{Y}\cdot(1-\alpha_g)+\vec{w}\cdot\alpha_g$. The saturation adjusted RGB colour sample vector $\vec{C}_o$ is obtained from the adder 62, which adds the saturation adjusted colour tone vector

$$\overrightarrow{C_T^o}$$

and the term $\vec{Y}\cdot(1-\alpha_g)+\vec{w}\cdot\alpha_g$ that is obtained from the mixer 60.

One common drawback of the first and second embodiments of the method for colour saturation adjustment is that a colour can be saturated. That is, depending on the degree of the colour saturation level of the input sample and the requested value of the colour saturation adjusting gain $\alpha$, the resulting saturation adjusted RGB colour vector $\vec{C}_o=(R_o,G_o,B_o)$ can be mapped to outside the colour gamut of the R,G,B signals (i.e., R>255, G>255, and/or B>255). In other words, the saturation adjusted RGB colour vector

$$\overrightarrow{C_T^o}=\alpha\cdot\vec{C}_T$$

can be saturated depending on the saturation level of $\vec{C}_T$ and $\alpha$. Hence, an optionally provided feature of the invention is the development of colour saturation limiting functions that can be incorporated into the method for colour saturation adjustment in an RGB colour system.

We will calculate the magnitude of the colour tone vector $\overrightarrow{C_T}$ and associate this magnitude with the saturation level of the colour tone vector $\overrightarrow{C_T}$. Remember that the colour tone vector $\overrightarrow{C_T}$ has the components $(R_T, G_T, B_T)$. We can calculate the magnitude, which we have associated with the saturation level of the colour tone vector $\overrightarrow{C_T}$ , using the following equation:

$$S(\overrightarrow{C_T}) = \sqrt{R_T^2 + G_T^2 + B_T^2}. \tag{7}$$

We can alternatively approximate the saturation level using the following equation:

$$S(\overrightarrow{C_T}) = |R_T| + |G_T| + |B_T|. \tag{8a}$$

Depending upon the application, various different forms of calculating the saturation level can be defined and the invention should not be limited to any one particular way of calculating this saturation level. For example, some additional ways of calculating the saturation level include:

$$S(\overrightarrow{C_T}) = \max(R_T^2, G_T^2, B_T^2); \tag{8b}$$

$$S(\overrightarrow{C_T}) = \max(|R_T|, |G_T|, |B_T|; \tag{8c}$$

$$S(\overrightarrow{C_T}) = \sqrt{(R_T^2 + G_T^2 + B_T^2) + (R_T - G_T)^2 + (G_T - B_T)^2 + (B_T - R_T)^2} \; ; \tag{8d}$$

and

$$S(\overrightarrow{C_T}) = |R_T| + |G_T| + |B_T| + |R_T - G_T| + |G_T - B_T| + |B_T - R_T|. \tag{8e}$$

Thus far, we have disclosed, two embodiments of the method for colour saturation adjustment. Examples have been given in equations (3)-(5) of how to decompose the digital RGB colour input sample vector $\vec{C} = (R, G, B)$ into a white vector $\vec{w}$ and a colour tone vector $C_T$, however, the invention should not be construed as being limited to these examples of the decomposition. Examples have been given in equations (7) and (8a)-(8e) of how to calculate the saturation level of the colour tone vector $\overrightarrow{C_T}$, however, as already discussed, the invention should not be construed as being limited to these examples of calculating the saturation level.

In the following text, four embodiments of a method for calculating the saturation adjusted colour tone vector

$$\overrightarrow{C_T^o}$$

will be disclosed. These embodiments of the method for calculating the saturation adjusted colour tone vector

$\overrightarrow{C_T^o}\overrightarrow{C_T^o}$ use different forms of the saturation adjustment parameter $P$. Any one of these embodiments for calculating the saturation adjusted colour tone vector

$$\overrightarrow{C_T^o}$$

can be used together with the first and second embodiments of the method for colour saturation adjustment.

The first embodiment of the method of calculating the saturation adjusted colour tone vector

$$\overrightarrow{C_T^o}$$

includes developing a saturation limiting parameter β that will be multiplied together with $\alpha \cdot \vec{C}_T$ in order to limit the saturation level to a certain level. That is, the saturation adjusted colour tone vector $C_T^o$ is given as:

$$\vec{C}_T^o = \beta \cdot \alpha \cdot C_T. \qquad (9)$$

Figure 8 shows two multipliers 60 and 62 connected to perform the operation described in equation (9). Accordingly, when using the first embodiment of the method for calculating the saturation adjusted colour tone vector

$$\overrightarrow{C_T^o}$$

in conjunction with the first embodiment of the method for colour saturation adjustment as expressed in equation (2a), we define the saturation adjustment parameter P as being β·α. Similarly, when using the first embodiment of the method for calculating the saturation adjusted colour tone vector

$$\overrightarrow{C_T^o}$$

in conjunction with the second embodiment of the method for colour saturation adjustment as expressed in equation (6a), we define the saturation adjustment parameter P as being β·α.

Now the question is how to formulate the saturation limiting parameter β. Note that the purpose of multiplying the saturation limiting parameter β with $\alpha \cdot \vec{C}_T$ as expressed in equation (9) is to prevent the saturation level of $\alpha \cdot \vec{C}_T$ from exceeding a certain saturation level.

If the saturation level $S(\alpha \cdot \vec{C}_T)$ is less than a certain level, which implies that $\alpha \cdot \vec{C}_T$ is "not saturated", then it is obvious from the purpose of introducing the saturation limiting parameter β that β should be equal to one. Hence, it can be stated that:

$$\beta = 1 \text{ if } S(\alpha \cdot \vec{C}_T) \le L, \qquad (10)$$

where L denotes a pre-determined saturation level to which we want to limit the colour saturation level of the adjusted colour samples. Hereinafter, L will be referred to as a predetermined limit value. It can be stated that:

$$\vec{C}_T^o = \alpha \cdot \vec{C}_T, \qquad (11)$$

when $S(\alpha \cdot (\vec{C}_T) \le L$.

Now in the case when $S(\alpha \cdot \vec{C}_T) > L$, we need to multiply $\alpha \cdot \vec{C}_T$ and the saturation limiting parameter β together so that the colour saturation level of the resulting saturation adjusted colour tone vector

$$\overrightarrow{C_T^o}$$

can be adjusted as a factor of β in order to prevent a possible saturation. The following constraint is imposed:

$$S(\vec{C}_T^0) = L.$$

From the definition given in (7) or (8a), for example, it is noted that:

$$S(\vec{C}_T^o) = S(\beta \cdot \alpha \cdot \vec{C}_T) = \beta \cdot S(\alpha \cdot \vec{C}_T).$$

We then obtain the following saturation limiting parameter:

$$\beta = \frac{L}{S(\alpha \cdot \vec{C}_T)} \qquad (12)$$

In summary, the saturation adjustment parameter $P$ is chosen to be the colour saturation adjusting gain $\alpha$ multiplied by the saturation limiting parameter $\beta$. The saturation adjusted colour tone vector

$$\overrightarrow{C_T^o}$$

is then calculated according to the following equation:

$$\vec{C}_T^o = \beta \cdot \alpha \cdot \vec{C}_T, \qquad (13)$$

where

$$\beta = \begin{cases} 1 & if \quad S(\alpha \cdot \vec{C}_T) \le L \\ \dfrac{L}{S(\alpha \cdot \vec{C}_T)} & else \end{cases} \qquad (14)$$

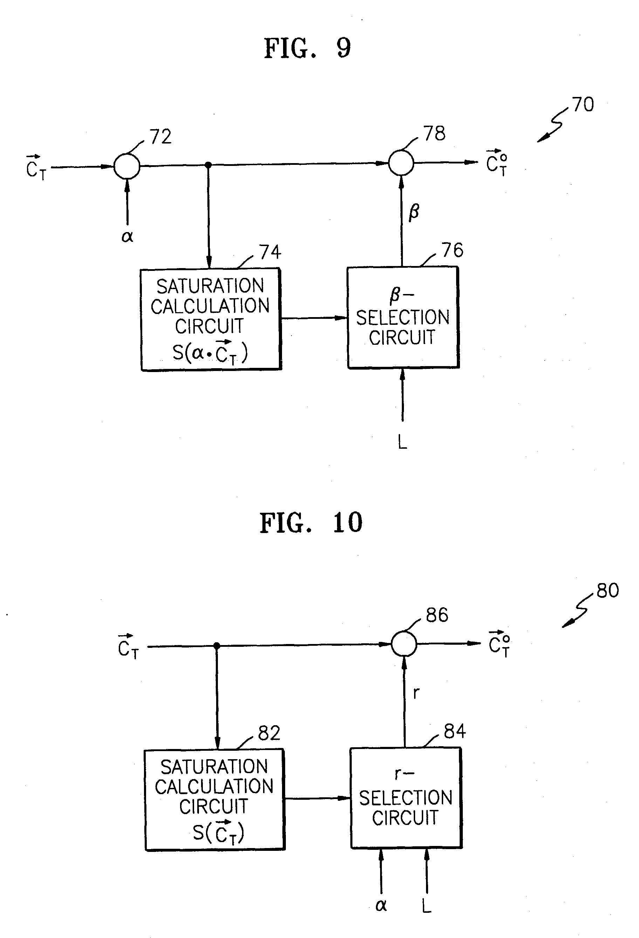

Figure 9 shows a block diagram of a circuit 70 for performing the first embodiment of the method of calculating the saturation adjusted colour tone vector

$$\overrightarrow{C_T^o}.$$

The multiplier 72 multiplies the colour tone vector $\overrightarrow{C_T}$ by the colour saturation adjusting gain $\alpha$. The saturation calculation circuit 74 calculates the saturation level $S(\alpha \cdot \vec{C}_T)$ and the $\beta$-selection circuit 76 chooses the value of the saturation limiting parameter $\beta$ in accordance with equation (14). The saturation adjusted colour tone vector

$$\overrightarrow{C_T^o}$$

is obtained from the multiplier 78, which multiplies $\beta$ and $\alpha \cdot \vec{C}_T$.
A second embodiment of the method for calculating the saturation adjusted colour tone vector

$$\overrightarrow{C_T^o}$$

will now be developed. If we note that $S(\alpha \cdot \vec{C}_T) = \alpha \cdot S(\vec{C}_T)$ and combine it with equations (13) and (14), we obtain:

$$\vec{C}_T^o = r \cdot \vec{C}_T \qquad (15)$$

where:

$$r = \begin{cases} \alpha & if \quad S(\vec{C}_T) \le \dfrac{L}{\alpha} \\ \dfrac{L}{S(\vec{C}_T)} & else \end{cases} \qquad (16)$$

The result obtained when using equations (15) and (16) to calculate the saturation adjusted colour tone vector

$$\overrightarrow{C_T^o}$$

is equivalent to the result obtained when using equations (13) and (14). Note, however, when equations (15) and (16) are used to calculate the saturation adjusted colour tone vector

$$\overrightarrow{C_T^o},$$

less computation is required than when using equations (13) and (14). Accordingly, when using the second embodiment of the method for calculating the saturation adjusted colour tone vector

$$\overrightarrow{C_T^o}$$

in conjunction with the first embodiment of the method for colour saturation adjustment as expressed in equation (2a), or the second embodiment of the method for colour saturation adjustment as expressed in equation (6a), we define the saturation adjustment parameter $P$ as being $r$.

Figure 10 shows a block diagram of a circuit 80 for performing the second method of calculating the saturation adjusted colour tone vector

$$\overrightarrow{C_T^o}.$$

The saturation calculation circuit 82 calculates the saturation level $S(\vec{C}_T)$ and the $r$-selection circuit 84 chooses the value of $r$ in accordance with equation (16). The saturation adjusted colour tone vector

$$\overrightarrow{C_T^o}$$

is obtained from the multiplier 86, which multiplies $r$ and $\vec{C}_T$.

A third embodiment of the method for calculating the saturation adjusted colour tone vector

$$\overrightarrow{C_T^o}$$

will now be developed. The saturation adjusted colour tone vector

$$\overrightarrow{C_T^o}$$

can be expressed according to the following equation:

$$\vec{C}_T^o = x \cdot \vec{C}_T, \qquad (17)$$

where $x$ denotes a real colour adjusting gain defined by:

$$x = \begin{cases} \alpha & if \quad 0 \le \alpha \le 1 \\ f(S(\vec{C}_T)) & if \quad \alpha > 1 \end{cases} \qquad (18)$$

The mathematical function $f(S(\vec{C}_T))$ can be any function that satisfies the following conditions:

- $f(S(\vec{C}_T))$ is a monotonically decreasing function with respect to $S(\vec{C}_T)$ for $0 \le S(\vec{C}_T) \le L$ where $L$ is a pre-determined constant limit value;
- $f(0) = \alpha$; and
- $f(S(\vec{C}_T)) = 1$ for $S(\vec{C}_T) \ge L$.

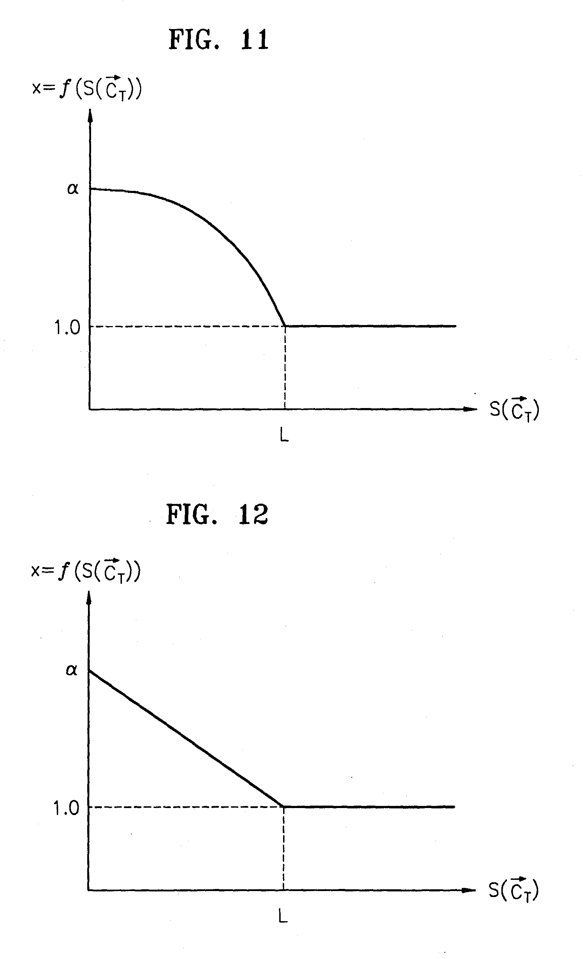

Note that the last condition ensures no change is made in the colour saturation level of the input sample when its colour saturation level exceeds a certain level even though the colour saturation adjusting gain is large ($\alpha > 1$). Examples of $f(S(\vec{C}_T))$ are shown in Figs. 11, 12, and 13. For instance, in Figure 11, $x = f(S(\vec{C}_T))$ for $0 \le S(\vec{C}_T) \le L$ can be expressed as:

$$x = 1 + (\alpha - 1) \cdot \frac{(L - S(\vec{C}_T)) \cdot (L + S(\vec{C}_T))}{L^2}$$

Because of the constraints on $f(S(\vec{C}_T))$, when $S(\vec{C}_T) \ge L$ , the real colour adjusting gain $x$ becomes:

$$x = \begin{cases} \alpha & if \quad 0 \le \alpha \le 1 \\ 1 & if \quad \alpha > 1 \end{cases}$$

When using the third embodiment of the method for calculating the saturation adjusted colour tone vector

$$\vec{C}_T^o$$

in conjunction with the first embodiment of the method for colour saturation adjustment as expressed in equation (2a) or with the second embodiment of the method for colour saturation adjustment as expressed in equation (6a), we define the saturation adjustment parameter $P$ as being the real colour adjusting gain $x$.

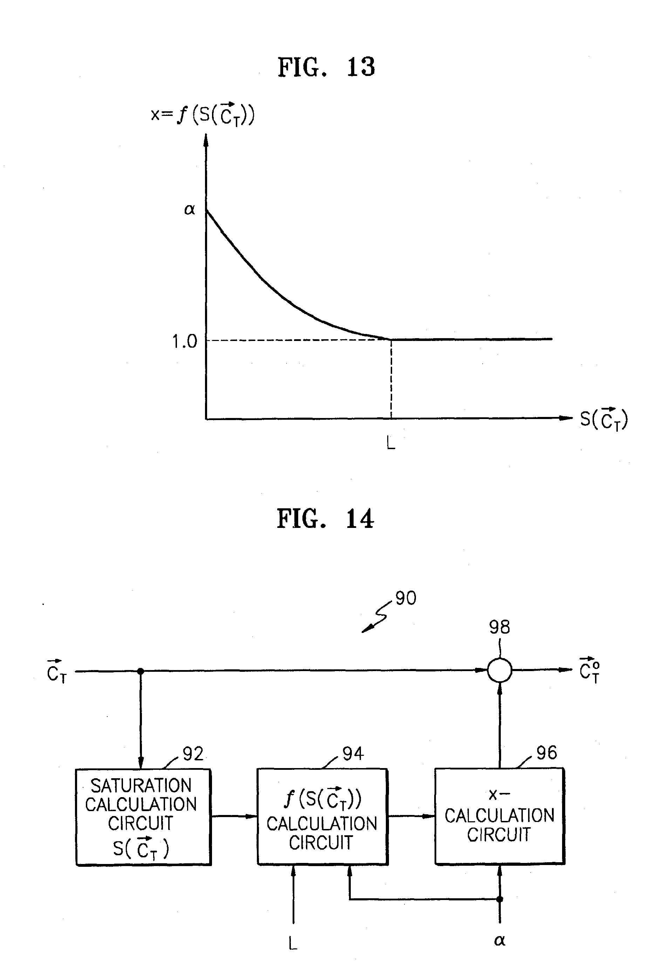

Figure 14 shows a block diagram of a circuit 90 for performing the third embodiment of the method for calculating the saturation adjusted colour tone vector

$$\vec{C}_T^o.$$

The saturation calculation circuit 92 calculates the saturation level $S(\vec{C}_T)$ . The circuit 94 for calculating $f(S(\vec{C}_T))$ evaluates $f(S(\vec{C}_T))$ at the saturation level $S(\vec{C}_T)$. The real colour adjusting gain circuit 96 chooses the value of $x$ in accordance with equation (18). The saturation adjusted colour tone vector

$$\vec{C}_T^o$$

is obtained from the multiplier 98, which multiplies $x$ and $\vec{C}_T$ .

A fourth embodiment of the method for calculating the saturation adjusted colour tone vector

$$\vec{C}_T^o$$

will now be developed. We will limit the saturation level of the saturation adjusted colour tone vector

$$\vec{C_T^o} = x \cdot \vec{C}_T$$

such that:

$$S(\vec{C_T^o}) = x \cdot S(\vec{C}_T) \le L.$$

When $S(\vec{C}_T) \le L$ and $\alpha > 1$, the following condition is obtained:

$$x \le \frac{L}{S(\vec{C}_T)} \qquad (19)$$

By combining equations (18) and (19), we obtain the following relationship for the real colour adjusting gain:

$$x = \begin{cases} \alpha & if \quad 0 \le \alpha \le 1 \\ \min(f(S(\vec{C}_T)), \dfrac{L}{S(\vec{C}_T)}) & if \quad \alpha > 1 \quad and \quad S(\vec{C}_T) \le L \qquad (20). \\ 1 & if \quad \alpha > 1 \quad and \quad S(\vec{C}_T) > L \end{cases}$$

When using the fourth embodiment of the method for calculating the saturation adjusted colour tone vector

$$\vec{C_T^o}$$

in conjunction with the first embodiment of the method for colour saturation adjustment as expressed in equation (2a) or with the second embodiment of the method for colour saturation adjustment as expressed in equation (6a), we define the saturation adjustment parameter $P$ as being the real colour adjusting gain $x$.

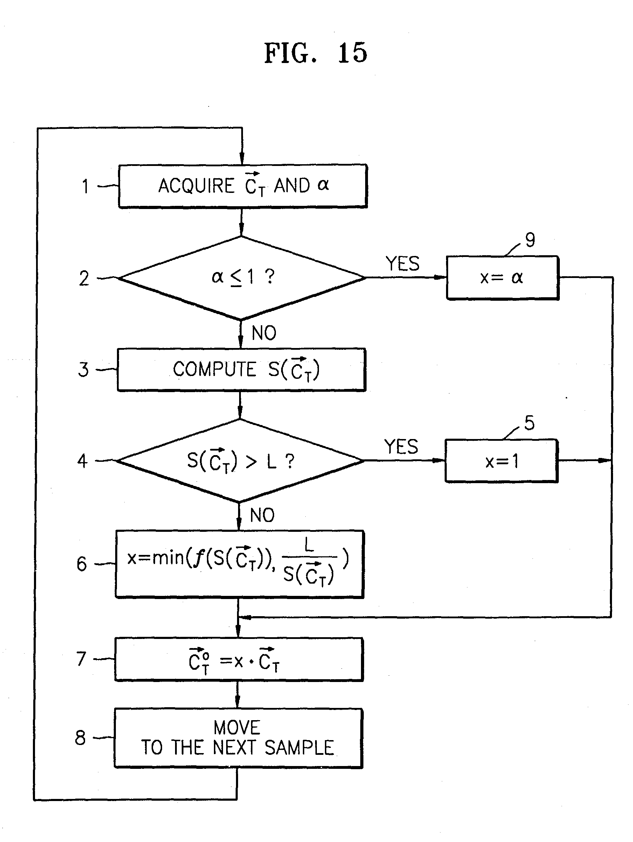

Figure 15 is a flowchart illustrating the steps used to implement the fourth embodiment of the method for calculating the saturation adjusted colour tone vector

$$\vec{C_T^o}$$

in accordance with equations (17) and (20). In step 1, the colour saturation adjusting gain $\alpha$ and the colour tone vector $\vec{C_T}$ are acquired. In step 2, it is determined whether the colour saturation adjusting gain $\alpha$ is equal to or less than 1. If so, the real colour adjusting gain $x$ is set equal to $\alpha$ in step 9. If the colour saturation adjusting gain $\alpha$ is not equal to or less than 1, then in step 3, the saturation level of the colour tone vector $\vec{C_T}$ is determined. In step 4, it is determined whether the saturation level of the colour tone vector $\vec{C_T}$ is greater than the predetermined limit L. If the saturation level of the colour tone vector $\vec{C_T}$ is greater than the predetermined limit L, then in step 5, the real colour adjusting gain $x$ is set equal to 1. If the saturation level of the colour tone vector $\vec{C_T}$ is not greater than the predetermined limit L, then in step 6, a first value is obtained by evaluating the mathematical function $f$ at the value of the saturation level of the colour tone vector $\vec{C_T}$ and a second value is obtained by dividing the predetermined limit L by the saturation level of the colour tone vector $\vec{C_T}$. Additionally in step 6, a minimum value is selected from the first value and the second value and the real colour adjusting gain $x$ is set equal to this minimum value. As can be seen in Figure 15, step 7 can follow either step 9, 5, or 6. In step 7, a saturation adjusted colour tone vector

$$\vec{C_T^o}$$

is obtained by multiplying the real colour adjusting gain x with the colour tone vector $\vec{C_T}$. The saturation adjusted colour tone vector

$$\overrightarrow{C_T^o}$$

can then be used in equation (2a) to perform the first embodiment of the method for colour saturation adjustment, or in equation (6a) to perform the second embodiment. Step 8 causes the procedure to loop back to step 1 to obtain the next colour tone vector $\overrightarrow{C_T}$, which may represent another pixel of the same input image, or which may possibly represent the first pixel of a subsequent input image.

A circuit for performing the fourth embodiment of the method for calculating the saturation adjusted colour tone vector

$$\overrightarrow{C_T^o}$$

can be constructed similarly to the circuit 90 shown in Figure 14. The difference will be that the real colour adjusting gain circuit 96 will choose the value of $x$ in accordance with equation (20).

## Claims

1. A method of adjusting the colour saturation level of a pixel of an RGB format image signal **characterised by** processing the RGB data $\vec{C}$ for said pixel to produce at least one value $\vec{w}$ representing the whiteness of the pixel and three values $\vec{C}_T$ representing the colour tone of the pixel, processing the colour tone representing values by multiplication with a saturation adjustment parameter, regenerating RGB data $\vec{C}_o$ for said pixel from the whiteness representing value or values $\vec{w}$ and the result of said processing of the colour tone representing values, and outputting the RGB format image signal with the regenerated RGB data for said pixel instead of the original RGB data for said pixel.

2. A method of adjusting the colour saturation level of an RGB image signal, wherein a method according to claim 1 is applied to each pixel of the RGB image signal.

3. A method according to claim 1 or 2, wherein the RGB image signal is a video signal.

4. A method for adjusting a colour saturation level of at least one colour pixel of an input image obtained from a time varying RGB video signal, which comprises:

   obtaining an RGB colour sample vector $\vec{C}$ representing the colour pixel of the input image obtained from the time varying RGB video signal;
   decomposing the RGB colour sample vector $\vec{C}$ into a white vector $\vec{w}$ and a colour tone vector $\vec{C}_T$;
   obtaining a saturation adjusted colour tone vector

$$\overrightarrow{C_T^o}$$

   by multiplying the colour tone vector $\vec{C}_T$ by a saturation adjustment parameter;
   obtaining a saturation adjusted RGB colour sample vector $\vec{C}_o$ by adding the white vector $\vec{w}$ and the saturation adjusted colour tone vector

$$\overrightarrow{C_T^o}\ ;$$

   and
   using the saturation adjusted RGB colour sample vector $\vec{C}_o$ to represent a colour pixel of an output image.

5. The method according to claim 4, which comprises:

   defining a luminance vector $\vec{Y}$ where each component of the luminance vector $\vec{Y}$ is a luminance value obtained from the RGB colour sample vector $\vec{C}$;
   configuring the saturation adjustment parameter to include at least a colour saturation adjusting gain $\alpha$;

obtaining a grey mixing ratio $\alpha_g$ by selecting a minimum value from the group consisting of one and the colour saturation adjusting gain $\alpha$;

obtaining a grey level adjusted vector by multiplying the luminance vector $\vec{Y}$ by a quantity obtained by subtracting the grey mixing ratio $\alpha_g$ from one; and

performing the step of obtaining the saturation adjusted RGB colour sample vector $\vec{C}_o$ by:

before adding the white vector $\vec{w}$ and the saturation adjusted colour tone vector

$$\overrightarrow{C_T^o},$$

multiplying the white vector $\vec{w}$ by the grey mixing ratio $\alpha_g$, and

when adding the white vector $\vec{w}$, which has been multiplied by the grey mixing ratio $\alpha_g$, and the saturation adjusted colour tone vector

$$\overrightarrow{C_T^o},$$

also adding thereto, the grey level adjusted vector to obtain the saturation adjusted RGB colour sample vector $\vec{C}_o$.

**6.** The method according to claim 4, which comprises:

acquiring a saturation adjusting gain $\alpha$; and

using the saturation adjusting gain $\alpha$ as the saturation adjustment parameter.

**7.** The method according to claim 4, which comprises:

acquiring a saturation adjusting gain $\alpha$;

determining a saturation level $S(\alpha \cdot \overrightarrow{C_T})$ of a quantity obtained by multiplying the saturation adjusting gain $\alpha$ by the colour tone vector $\overrightarrow{C_T}$ ; and

if the saturation level $S(\alpha \cdot \overrightarrow{C_T})$ is greater than a predetermined limit value L, then:

obtaining a saturation limiting parameter $\beta$ by dividing the predetermined limit value L by the saturation level $S(\alpha \cdot \overrightarrow{C_T})$ and

obtaining the saturation adjustment parameter by multiplying the saturation adjusting gain $\alpha$ by the saturation limiting parameter $\beta$.

**8.** The method according to claim 7, which comprises:

if the saturation level $S(\alpha \cdot \overrightarrow{C_T})$ is not greater than the predetermined limit value L, then:

setting the saturation limiting parameter $\beta$ equal to one, and

obtaining the saturation adjustment parameter by multiplying the saturation adjusting gain $\alpha$ by the saturation limiting parameter $\beta$.

**9.** The method according to claim 7, which comprises:

if the saturation level $S(\alpha \cdot \overrightarrow{C_T})$ is not greater than the predetermined limit value L, then using the saturation adjusting gain $\alpha$ as the saturation adjustment parameter.

**10.** The method according to claim 4, which comprises:

acquiring a saturation adjusting gain $\alpha$;

determining a saturation level $S(\overrightarrow{C_T})$ of the colour tone vector $\overrightarrow{C_T}$ ;

if the saturation level $S(\overrightarrow{C_T})$ of the colour tone vector $\overrightarrow{C_T}$ is not greater than a predetermined limit value L divided by the saturation adjusting gain $\alpha$, then using the saturation adjusting gain $\alpha$ as the saturation adjustment parameter; and

if the saturation level $S(\overrightarrow{C_T})$ is greater than the predetermined limit value L divided by the saturation adjusting gain $\alpha$, then setting the saturation adjustment parameter equal to a value obtained by dividing the predetermined limit value L by the saturation level $S(\overrightarrow{C_T})$ of the colour tone vector $\overrightarrow{C_T}$.

**11.** The method according to claim 4, which comprises:

acquiring a saturation adjusting gain $\alpha$; and
if the saturation adjusting gain $\alpha$ is not less than zero and not greater than one, then using the saturation adjusting gain $\alpha$ as the saturation adjustment parameter that is multiplied by the colour tone vector $\vec{C}_T$ to thereby set a saturation level of the saturation adjusted colour tone vector

$$\overrightarrow{C_T^o}.$$

.

**12.** The method according to claim 11, which comprises:

selecting a mathematical function that is a monotonically decreasing function with respect to an argument as the argument varies between zero and a predetermined limit value L;
ensuring that when the mathematical function is evaluated using an argument that equals zero, the mathematical function equals the saturation adjusting gain $\alpha$;
ensuring that when the mathematical function is evaluated at values of the argument being not less than the predetermined limit value L, the mathematical function equals one; and
if the saturation adjusting gain $\alpha$ is greater than one, then:

determining a saturation level $S(\overrightarrow{C_T})$ of the colour tone vector $\vec{C}_T$,
using the saturation level $S(\overrightarrow{C_T})$ of the colour tone vector $\vec{C}_T$ as the argument and evaluating the mathematical function to obtain a value of the mathematical function, and
using the value of the mathematical function as the saturation adjustment parameter that is multiplied by the colour tone vector $\vec{C}_T$ to thereby set the saturation level of the saturation adjusted colour tone vector

$$\overrightarrow{C_T^o}.$$

**13.** The method according to claim 11, which comprises:

determining a saturation level $S(\overrightarrow{C_T})$ of the colour tone vector $\vec{C}_T$; and
if the saturation level $S(\overrightarrow{C_T})$ of the colour tone vector $\vec{C}_T$ is not less than a predetermined limit value L and if the saturation adjusting gain $\alpha$ is greater than one, then:

setting the saturation adjustment parameter that is multiplied by the colour tone vector $\vec{C}_T$ to a value of one to thereby set the saturation level of the saturation adjusted colour tone vector

$$\overrightarrow{C_T^o}.$$

**14.** The method according to claim 11, which comprises:

selecting a mathematical function that is a monotonically decreasing function with respect to an argument as the argument varies between zero and a predetermined limit value L;
ensuring that when the mathematical function is evaluated using an argument that equals zero, the mathematical function equals the saturation adjusting gain $\alpha$;
ensuring that when the mathematical function is evaluated at values of the argument being not less than the predetermined limit value L, the mathematical function equals one;
determining a saturation level $S(\overrightarrow{C_T})$ of the colour tone vector $\vec{C}_T$; if the saturation level $S(\overrightarrow{C_T})$ of the colour tone vector $\vec{C}_T$ is not greater than the predetermined limit value L and if the saturation adjusting gain $\alpha$ is greater than one, then:

using the saturation level $S(\overrightarrow{C_T})$ of the colour tone vector $\vec{C}_T$ as the argument and evaluating the mathematical function to obtain a value of the mathematical function,
selecting a minimum value from the group consisting of the value of the mathematical function, evaluated using the saturation level $S(\overrightarrow{C_T})$ of the colour tone vector $\vec{C}_T$, and a value obtained from dividing the predetermined limit value L by the saturation level $S(\overrightarrow{C_T})$ of the colour tone vector $\vec{C}_T$, and

setting the saturation adjustment parameter that is multiplied by the colour tone vector $\vec{C}_T$ to be equal to the minimum value such that the saturation level of the saturation adjusted colour tone vector

$$\overrightarrow{C_T^o}$$

is thereby set; and
if the saturation level $S(\overrightarrow{C_T})$ of the colour tone vector $\vec{C}_T$ is greater than the predetermined limit value L and if the saturation adjusting gain $\alpha$ is greater than one, then:

setting the saturation adjustment parameter that is multiplied by the colour tone vector $\vec{C}_T$ to be equal to one to thereby set the saturation level of the saturation adjusted colour tone vector

$$\overrightarrow{C_T^o}.$$

.

**15.** The method according to claim 4, which comprises:

before performing the step of obtaining the saturation adjusted colour tone vector

$$\overrightarrow{C_T^o},$$

determining a saturation level $S(\overrightarrow{C_T})$ of the colour tone vector $\overrightarrow{C_T}$, and choosing a value of the saturation adjustment parameter in dependence on the saturation level $S(\overrightarrow{C_T})$ of the colour tone vector $\overrightarrow{C_T}$.

**16.** The method according to claim 15, which comprises: determining the saturation level $S(\overrightarrow{C_T})$ of the colour tone vector $\overrightarrow{C_T}$ by estimating a magnitude of the colour tone vector $\overrightarrow{C_T}$.

**17.** The method according to claim 15, which comprises:

representing the colour tone vector $\overrightarrow{C_T}$ with components $(R_T, G_T, B_T)$; and
determining the saturation level $S(\overrightarrow{C_T})$ of the colour tone vector $\overrightarrow{C_T}$ using formula:

$$S(\overrightarrow{C_T}) = \sqrt{R_T^2 + G_T^2 + B_T^2}.$$

**18.** The method according to claim 15, which comprises:

representing the colour tone vector $\overrightarrow{C_T}$ with components $(R_T, G_T, B_T)$; and determining the saturation level $S(\overrightarrow{C_T})$ of the colour tone vector $\overrightarrow{C_T}$ using formula:

$$S(\overrightarrow{C_T}) = |R_T| + |G_T| + |B_T|.$$

**19.** The method according to claim 15, which comprises:

representing the colour tone vector $\overrightarrow{C_T}$ with components $(R_T, G_T, B_T)$; and
determining the saturation level $S(\overrightarrow{C_T})$ of the colour tone vector $\overrightarrow{C_T}$ using formula:

$$S(\overrightarrow{C_T})=\max(R_T^2,G_T^2,B_T^2).$$

**20.** The method according to claim 16, which comprises:

representing the colour tone vector $\overrightarrow{C_T}$ with components $(R_T,G_T,B_T)$; and determining the saturation level $S(\overrightarrow{C_T})$ of the colour tone vector $\overrightarrow{C_T}$ using formula:

$$S(\overrightarrow{C_T})=\max(|R_T|,|G_T|,|B_T|).$$

**21.** The method according to claim 15, which comprises:

representing the colour tone vector $\overrightarrow{C_T}$ with components $(R_T,G_T,B_T)$; and determining the saturation level $S(\overrightarrow{C_T})$ of the colour tone vector $\overrightarrow{C_T}$ using formula:

$$S(\overrightarrow{C_T})=\sqrt{(R_T^2+G_T^2+B_T^2)+(R_T-G_T)^2+(G_T-B_T)^2+(B_T-R_T)^2}.$$

**22.** The method according to claim 15, which comprises:

representing the colour tone vector $\overrightarrow{C_T}$ with components $(R_T,G_T,B_T)$; and determining the saturation level $S(\overrightarrow{C_T})$ of the colour tone vector $\overrightarrow{C_T}$ using formula:

$$S(C_T)=|R_T|+|G_T|+|B_T|+|R_T-G_T|+|G_T-B_T|+|B_T-R_T|$$

**23.** The method according to claim 4, which comprises:

performing the step of decomposing the RGB colour sample vector $\vec{C}$ by:

representing the RGB colour sample vector $\vec{C}$ with components $(R,G,B)$;
calculating a luminance value $Y$ from the RGB colour sample vector $\vec{C}$,
determining the white vector $\vec{w}$ according to equation: $\vec{w}=(Y,Y,Y)$, and
determining the colour tone vector $\vec{C}_T$ according to equation:

$$\overrightarrow{C_T}=(R\text{-}Y,G\text{-}Y,B\text{-}Y).$$

**24.** The method according to claim 4, which comprises:

performing the step of decomposing the RGB colour sample vector $\vec{C}$ by:

representing the RGB colour sample vector $\vec{C}$ with components $(R, G, B)$;

determining the white vector $\vec{w}$ according to equation:

$$\vec{w}=(X,X,X), \text{ where } X=\frac{R+G+B}{3},$$

and

determining the colour tone vector $\vec{C}_T$ according to equation:

$$\vec{C}_T =(R\text{-}X,G\text{-}X,B\text{-}X)$$

**25.** The method according to claim 4, which comprises:

performing the step of decomposing the RGB colour sample vector $\vec{C}$ by:

representing the RGB colour sample vector $\vec{C}$ with components $(R,G,B)$;

determining the white vector $\vec{w}$ according to equation:

$$\vec{w}=(\frac{G+B}{2},\ \frac{R+B}{2},\ \frac{R+G}{2}),$$

and

determining the colour tone vector $\vec{C}_T$ according to equation:

$$\vec{C}_T=(R-\frac{G+B}{2},\ G-\frac{R+B}{2},\ B-\frac{R+G}{2}).$$

**26.** The method according to claim 4, which comprises:

defining a luminance vector $\vec{Y}$ where each component of the luminance vector $\vec{Y}$ is a luminance value obtained from the RGB colour sample vector $\vec{C}$;
acquiring a colour saturation adjusting gain $\alpha$;
obtaining a grey mixing ratio $\alpha_g$ by selecting a minimum value from the group consisting of one and the colour saturation adjusting gain $\alpha$;
obtaining a grey level adjusted vector by multiplying the luminance vector $\vec{Y}$ by a quantity obtained by subtracting the grey mixing ratio $\alpha_g$ from one; and
performing the step of obtaining the saturation adjusted RGB colour sample vector $\vec{C}_o$ by:

before adding the white vector $\vec{w}$ and the saturation adjusted colour tone vector

$$\vec{C_T^o},$$

, multiplying the white vector $\vec{w}$ by the grey mixing ratio $\alpha_g$, and
when adding the white vector $\vec{w}$, which has been multiplied by the grey mixing ratio $\alpha_g$, and the saturation adjusted colour tone vector

$$\vec{C_T^o},$$

also adding thereto, the grey level adjusted vector to obtain the saturation adjusted RGB colour sample vector $\vec{C}_o$.

## FIG. 1 (PRIOR ART)

$$^{10}$$

$$Y \longrightarrow Y$$

DIGITAL
VIDEO
SAMPLES

$$U,V \longrightarrow \bigcirc \longrightarrow U_o = \alpha \cdot U, V_o = \alpha \cdot V$$

$$\alpha$$

COLOR SATURATION
ADJUSTING GAIN

## FIG. 2 (PRIOR ART)

$$^{12}$$

DIGITAL
VIDEO
SAMPLES

$$R \longrightarrow$$ | RGB TO YUV CONVERSION | $$\xrightarrow{Y}$$ | YUV TO RGB CONVERSION | $$\longrightarrow R_o$$

$$G \longrightarrow$$ $$\longrightarrow G_o$$

$$B \longrightarrow$$ $$\xrightarrow{U,V} \bigcirc \xrightarrow{U_o, V_o}$$ $$\longrightarrow B_o$$

$$\alpha$$

# FIG. 3

# FIG. 4

# FIG. 5

$$\vec{w} = (Y, Y, Y)$$

$$\vec{C}_o = (R_o, G_o, B_o)$$

# FIG. 6

$$\vec{C}_o = (R_o, G_o, B_o)$$

FIG. 7

FIG. 8

## FIG. 9

$\vec{C}_T$ → (72) → •
↑
$\alpha$

(70)

• → (78) → $\vec{C}_T^o$
↑
$\beta$

(74) SATURATION CALCULATION CIRCUIT $S(\alpha \cdot \vec{C}_T)$ → (76) $\beta-$ SELECTION CIRCUIT
↑
L

## FIG. 10

$\vec{C}_T$ → • → (86) → $\vec{C}_T^o$
↑
r

(80)

(82) SATURATION CALCULATION CIRCUIT $S(\vec{C}_T)$ → (84) $r-$ SELECTION CIRCUIT
↑    ↑
$\alpha$    L

FIG. 11

$x = f(S(\vec{C}_T))$

FIG. 12

$x = f(S(\vec{C}_T))$

## FIG. 13

$$x = f(S(\vec{C}_T))$$

$$S(\vec{C}_T)$$

$\alpha$

$1.0$

$L$

## FIG. 14

90

98

$\vec{C}_T$

$\vec{C}_T^o$

92 — SATURATION CALCULATION CIRCUIT $S(\vec{C}_T)$

94 — $f(S(\vec{C}_T))$ CALCULATION CIRCUIT

96 — x− CALCULATION CIRCUIT

L

$\alpha$

# FIG. 15

```
1 ──[ ACQUIRE $\vec{C}_T$ AND $\alpha$ ]
            │
            ▼
2 ──< $\alpha \leq 1$ ? >──YES──▶[ $x = \alpha$ ]  9
            │ NO
            ▼
3 ──[ COMPUTE $S(\vec{C}_T)$ ]
            │
            ▼
4 ──< $S(\vec{C}_T) > L$ ? >──YES──▶[ $x = 1$ ]  5
            │ NO
            ▼
6 ──[ $x = \min\left(f(S(\vec{C}_T)), \dfrac{L}{S(\vec{C}_T)}\right)$ ]
            │
            ▼
7 ──[ $\vec{C}_T^{\,o} = x \cdot \vec{C}_T$ ]
            │
            ▼
8 ──[ MOVE TO THE NEXT SAMPLE ]
```